# DEMANDE DE BREVET EUROPEEN

(11) **EP 3 153 836 A1**
(43) Date de publication de la demande: **12.04.2017**
(21) Numéro de dépôt: 16190977.5
(22) Date de dépôt: 28.09.2016
(51) Int. Cl.: G01M 15/02, G01M 15/14

(54) **BANC DE TEST DE TURBOMACHINE SUR BATEAU**

(30) Priorité: 09.10.2015 BE 201505650
(71) Demandeur: Safran Aero Boosters SA, 4041 Herstal (BE)
(72) Inventeur: JONGEN, Thibauld, 3001 Heverlee (BE)
(74) Mandataire: Lecomte & Partners

(57) **Abrégé**

L'invention propose un banc d'essai ou banc de test (6) pour turbomachine (8), notamment pour turboréacteur avion. Le banc de test (6) est installé sur un bateau (4), telle une barge qui peut être emmenée en différents endroits du globe pour effectuer des essais avec du vent, et à basse température de l'ordre de -50°C. Le bateau (4) est maniable, ce qui permet de le tourner à volonté en cas de vent pour effectuer un essai avec un vent de travers. Le procédé permet des essais réalistes pendant l'entretien et la conception d'une turbomachine (8). L'invention propose également un procédé de test de turbomachine (8).

## Description

### Domaine technique

L'invention concerne le domaine des bancs de tests pour turbomachine. Plus précisément, l'invention aborde le domaine des bancs de test de turboréacteur d'avion en plein air. L'invention propose également un procédé de test d'une turbomachine.

### Technique antérieure

Pendant la conception ou l'entretien d'une turbomachine, notamment d'un turboréacteur d'avion, différents tests sont réalisés afin de valider son bon fonctionnement. Ces tests permettent de contrôler sa résistance et ses réactions lors de phases de fonctionnement prolongées, en maintenant des régimes prédéterminés. Lors de ces tests, une série de mesures sont effectuées pour surveiller des paramètres clés. Ces mesures peuvent à la fois s'effectuer directement sur la turbomachine, ou sur son environnement.

Afin de conduire de tels tests, la turbomachine est installée sur un banc d'essais dédié. Lorsqu'il s'agit d'un turboréacteur d'avion, il est préalablement démonté de l'aéronef puis installé sur le banc de test. Celui-ci est adapté pour résister à la poussée et aux vibrations de la turbomachine, il peut également recréer des conditions fidèles au vol tout en restant au sol. Le banc comporte en outre un adaptateur pour permettre le montage et l'essai de différents modèles de turboréacteurs.

Le document US 5396791 A divulgue un banc d'essai d'un turboréacteur d'avion. Le banc d'essai comprend une colonne verticale d'où s'étend latéralement une structure supérieure. Celle-ci reçoit le turboréacteur par l'intermédiaire d'un adaptateur permettant de simuler la flexibilité de l'aile d'avion. Il permet par ailleurs de simuler plusieurs systèmes d'installation de moteur. Cependant, un tel banc d'essai reste limité dans les possibilités de simulation qu'il offre.

### Résumé de l'invention

### Problème technique

L'invention a pour objectif de résoudre au moins un des problèmes posés par l'art antérieur. Plus précisément, l'invention a pour objectif de varier davantage les conditions d'essais du banc d'essais. L'invention a également pour objectif de proposer une solution résistante, fiable, facile à produire, commode d'entretien, et d'inspection aisée.

### Solution technique

L'invention a pour objet un ensemble comprenant un banc de test de turbomachine, notamment un turboréacteur d'aéronef, le banc de test comprenant une pluralité de capteurs adaptés pour mesurer des données de test de la turbomachine ; remarquable en ce qu'il comprend en outre un bateau où le banc de test est installé afin d'y tester la turbomachine.

Selon un mode avantageux de l'invention, le bateau comprend une plateforme généralement plane où est disposé le banc de test.

Selon un mode avantageux de l'invention, la plateforme est configurée pour être en regard de la turbomachine, et/ou la surface supérieure de la plateforme forme la face supérieure du bateau.

Selon un mode avantageux de l'invention, la surface de la plateforme est supérieure ou égale à 100 m2, préférentiellement supérieure ou égale à 500 m2, plus préférentiellement supérieure ou égale à 2500 m2.

Selon un mode avantageux de l'invention, la ligne de flottaison est au moins 100 cm sous le niveau général de la plateforme, préférentiellement au moins 200 cm sous le niveau général de la plateforme.

Selon un mode avantageux de l'invention, le banc de test comprend une interface de fixation de turbomachine qui est au moins 4,00 m au-dessus de la plateforme, préférentiellement au moins 6,00 m au-dessus, plus préférentiellement au moins 8,00 m au-dessus.

Selon un mode avantageux de l'invention, le banc de test comprend un support de fixation de la turbomachine avec une portion de fixation de turbomachine, la portion étant éventuellement configurée de sorte à y suspendre la turbomachine.

Selon un mode avantageux de l'invention, le support comprend un pilier vertical et éventuellement une poutre horizontale configurée pour recevoir la turbomachine, notamment pour l'y suspendre via un adaptateur.

Selon un mode avantageux de l'invention, l'ensemble comprend un déflecteur du flux aval de la turbomachine configuré pour annuler la poussée de la turbomachine, le déflecteur comprenant éventuellement deux écopes latérales qui dévient chacune le flux de la turbomachine à la perpendiculaire.

Selon un mode avantageux de l'invention, selon sa longueur le bateau présente trois tiers, le tiers arrière étant configuré pour y installer la turbomachine.

Selon un mode avantageux de l'invention, le bateau est une barge, notamment à fond plat ou sensiblement incurvé.

Selon un mode avantageux de l'invention, le bateau comprend un axe longitudinal central configuré pour être parallèle à l'axe de la turbomachine, lesdits axes étant éventuellement désaxés selon un plan horizontal.

Selon un mode avantageux de l'invention, le bateau comprend au moins une unité de propulsion, préférentiellement plusieurs unités de propulsion orientables.

Selon un mode avantageux de l'invention, le bateau comprend un réservoir de carburant et/ou une batterie électrique alimentant la turbomachine.

Selon un mode avantageux de l'invention, le fond sensiblement incurvé peut être une portion bombée de coque de la barge.

Selon un mode avantageux de l'invention, les écopes dévient le flux de la turbomachine selon des directions opposées, notamment diamétralement opposées.

Selon un mode avantageux de l'invention, la ligne de flottaison est à moins de 10 m du niveau général de la plateforme, préférentiellement à moins de 5 m, plus préférentiellement à moins de 3 m. Le niveau général peut être la surface supérieure de la plateforme.

Selon un mode avantageux de l'invention, la longueur du bateau est inférieure ou égale à 125 m, préférentiellement inférieure ou égale à 30 m.

Selon un mode avantageux de l'invention, le bateau comprend des plots destinés à y fixer des câbles de traction du bateau, les plots étant préférentiellement disposés en avant du bateau.

Selon un mode avantageux de l'invention, le bateau et éventuellement la plateforme sont généralement rectangulaires.

Selon un mode avantageux de l'invention, selon sa largeur, le bateau comprend une zone centrale de réception de la turbomachine en vue d'y effectuer un test.

Selon un mode avantageux de l'invention, la coque du bateau est asymétrique, notamment afin de marquer un sens principal de déplacement. Ceci permet de déterminer l'avant du bateau.

Selon un mode avantageux de l'invention, le bateau, notamment la plateforme et/ou la coque, comprennent un renfort joint au support de fixation de la turbomachine.

Selon un mode avantageux de l'invention, la pluralité de capteurs comprend au moins dix ou au moins cent ou au moins mille ou au moins dix mille capteurs.

Selon un mode avantageux de l'invention, les capteurs sont répartis sur le bateau, et/ou dans une partie de test du bateau, et/ou sur la plateforme, et/ou montés sur le support de fixation.

L'invention a également pour objet un bateau remarquable en ce qu'il comprend un banc de test pour turbomachine, notamment pour turboréacteur d'aéronef. L'invention résout le problème de pouvoir réaliser un test de turbomachine sur un bateau.

L'invention a également pour objet un procédé de test d'une turbomachine comprenant les étapes suivantes, éventuellement réalisées dans l'ordre suivant : (d) installation de la turbomachine sur un banc de test, remarquable en ce que le banc de test est installé sur un bateau ; et en ce que le procédé comprend en outre une étape de (e) test de la turbomachine depuis ledit bateau ; préférentiellement le banc de test et le bateau forment un ensemble conforme à l'invention.

Selon un mode avantageux de l'invention, préalablement à l'étape (d) installation, le procédé comprend une étape de (c) transport de la turbomachine.

Selon un mode avantageux de l'invention, préalablement à l'étape (d) installation et éventuellement préalablement à l'étape (c) transport, le procédé comprend une étape de (b) démontage de la turbomachine d'un véhicule qu'elle équipe.

Selon un mode avantageux de l'invention, le procédé comprend une phase de sélection d'une température T1, puis une phase d'identification d'un endroit géographique où la température est inférieure ou égale à la température T1, puis une phase de déplacement du bateau jusqu'à l'endroit géographique précédemment identifié.

Selon un mode avantageux de l'invention, le procédé comprend une phase de sélection d'une vitesse de vent V1, puis une phase d'identification d'un endroit géographique où la vitesse du vent est supérieure ou égale à la valeur V1 ou ledit endroit présente une probabilité P2 supérieure ou égale à une probabilité P1 de trouver un vent ayant une vitesse supérieure ou égale à V1, puis une phase de déplacement du bateau jusqu'à l'endroit géographique précédemment identifié.

Selon un mode avantageux de l'invention, le procédé comprend un phase de détection d'un vent dans l'environnement du banc de test se déplaçant selon un axe, le procédé comprenant une phase de pivotement du bateau de sorte à modifier, notamment à augmenter l'inclinaison entre l'axe du vent et l'axe de la turbomachine.

Selon un mode avantageux de l'invention, pendant l'étape (e) test, le bateau reste généralement sur place. Son centre de gravité demeure au même endroit dans l'espace, il est immobile. Des vagues peuvent sensiblement modifier son altitude.

Selon un mode avantageux de l'invention, suite à l'étape (e) test, la turbomachine est montée sur un véhicule, notamment un aéronef tel un avion, la turbomachine peut notamment servir à propulser ledit avion.

Selon un mode avantageux de l'invention, l'étape (d) installation comprend le chargement de la turbomachine sur le bateau.

Selon un mode avantageux de l'invention, lors de l'étape (e) test, les capteurs mesurent des grandeurs physiques du test, notamment des informations sur le fonctionnement de la turbomachine.

De manière générale, les modes avantageux de chaque objet de l'invention sont également applicables aux autres objets de l'invention. Dans la mesure du possible, chaque objet de l'invention est combinable aux autres objets.

### Avantages apportés

L'invention offre une grande diversité de conditions de test, et s'approche de conditions de vols réalistes. L'installation sur un bateau permet d'exploiter le vent en mer dont la vitesse peut dépasser 100 km/h, voire 300 km/h. En pivotant le bateau, il devient possible de moduler l'angle du vent de travers entrant dans le turboréacteur. Ces mouvements permettent également de simuler un changement de cap de l'avion. La présence de vagues, plus ou moins cassantes, peut également reproduire des conditions de changement de cap.

Aussi, l'intégration sur un bateau mobile permet de déplacer le banc de test et de rejoindre les pôles. A cet endroit, la température peut atteindre les -50°C, ce qui correspond aux conditions en altitude d'un vol de croisière d'un avion. Des conditions givrantes peuvent être rencontrées. L'énergie nécessaire à la création de ce climat est réduite. Cette condition de test est homogène et fiable. Ces aspects se conjuguent également aux tests en conditions venteuses.

L'invention permet donc de créer une situation de vent givrant de travers tout en recréant un changement de cap, sans nécessiter de moyens externes. Se placer en mer offre un espace dégagé, libre de réverbérations des ondes produites par la turbomachine. Cette solution évite également que les nuisances sonores ne dérangent qui que ce soit.

### Brève description des dessins

La figure 1 représente un ensemble selon l'invention.
La figure 2 est une vue en plan de l'ensemble selon l'invention.
La figure 3 esquisse un schéma du procédé de test d'une turbomachine selon l'invention.

### Description des modes de réalisation

La direction axiale correspond à la direction le long de l'axe de rotation de la turbomachine. La direction longitudinale est selon la longueur du bateau et est éventuellement parallèle à la direction axiale. L'amont et l'aval sont en référence au sens d'écoulement principal du flux dans la turbomachine.

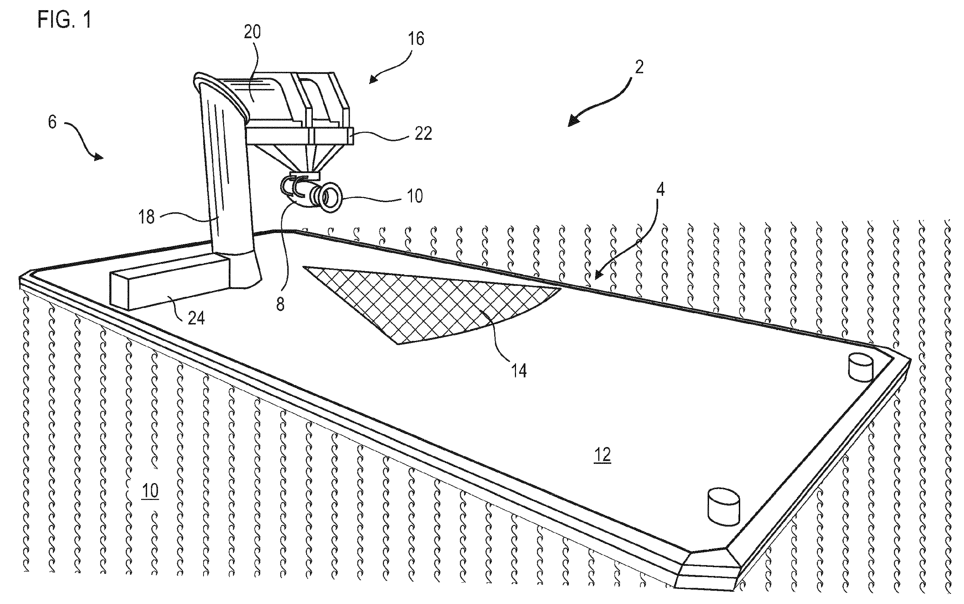

La figure 1 représente une vue isométrique d'un ensemble 2 selon l'invention. L'ensemble 2 comporte un bateau 4 et un banc de test 6 d'une turbomachine 8, également appelé banc d'essai. Le bateau 4 ici représenté est en condition de test et flotte sur une étendue d'eau 10

En l'occurrence, la turbomachine 8 testée est un turboréacteur d'avion, éventuellement double flux. Il comporte une soufflante exerçant une poussée s'ajoutant à la poussée du flux primaire. La turbomachine 8 est apte à exercer une poussée supérieure ou égale à 100 kN, préférentiellement supérieure ou égale à 300 kN, plus préférentiellement supérieure ou égale à 500 kN. Son taux de dilution peut être supérieur ou égal à 4, ou 5, ou 6, ou 7, éventuellement supérieur ou égal à 9,50. Il peut s'agir d'un open rotor.

L'entrée de la turbomachine 8 peut être équipée d'une manche d'entrée d'air 10 pour améliorer la manière dont se présente l'air entrant. Un système d'écope (non représenté) en aval de la turbomachine 8 permet d'en dévier le flux afin d'annuler la poussée axiale de la turbomachine 8 ; ce qui simplifie l'immobilisation du bateau 4. Les écopes peuvent fonctionner à la manière d'inverseurs de poussée, et/ou s'ajouter aux inverseurs de poussée de la turbomachine 8.

Par bateau, on entend un ouvrage flottant, de toute dimension, utilisé pour la navigation. Il peut comprendre une coque. Elle lui permet de flotter. Le bateau 4 peut être une barge. On entend par barge un bateau 4 à fond plat ou sensiblement arrondi. Le bateau 4 peut comprendre des moyens d'ancrage pour rester stationnaire, éventuellement pour contrer la poussée de la turbomachine 8. Le bateau 4 présente une plateforme 12 supérieure formant une étendue dégagée et plane.

La plateforme 12 forme la face supérieure du bateau 4, elle s'étend sur sensiblement toute la largeur et/ou sur toute la longueur du bateau 4. Elle occupe la majorité de la surface du bateau 4. La plateforme 12 peut être une plaque ou une dalle, éventuellement en béton, qui résiste aux gaz d'échappement de la turbomachine 8. La plateforme 12 est adaptée pour supporter une température de l'ordre de 500°C ou 1000°C, ce qui résiste également aux incendies moteurs. Une zone 14 en avant de la turbomachine 12 est tracée au sol, elle indique la zone d'où l'air est aspiré dans la turbomachine 8.

Le banc de test 6 peut comprendre un support de fixation 16 de la turbomachine 8. Le support 16 peut former le point culminant de l'ensemble 2. Le support 16 peut inclure un poteau vertical 18 s'étendant verticalement vers le haut depuis la plateforme 12. En complément, une poutre 20 transversale s'étend latéralement depuis le sommet du poteau 18. L'extrémité libre de la poutre 20 comprend une portion de fixation qui reçoit la turbomachine 8 par l'intermédiaire d'un adaptateur 22 et/ou d'un berceau. La turbomachine 8 est suspendue au support 16. Chacun des tronçons (18, 20, 22) du support 16 entre le bateau 4 et la turbomachine 8 résiste à la poussée de cette dernière.

Le bateau 4 peut comprendre un renfort (non visible) lié au support de fixation 16 pour mieux reprendre les efforts issus de la turbomachine 8. Le renfort peut être en prévu au niveau de la plateforme 12 et/ou de la coque. Il peut être joint au poteau vertical 18 qui peut d'ailleurs traverser la plateforme 12 et la cale du bateau pour relier la coque.

Chaque tronçon (18, 20, 22) peut comprendre des liaisons et des conduites. Elles permettent l'alimentation en carburant de la turbomachine 8, et éventuellement des connexions électriques pour effectuer des relevés de mesures des capteurs électriques observant la turbomachine 8 pendant son test. Dix mille capteurs peuvent être employés, par exemple pour mesurer une pression, une température, une vitesse d'écoulement, des vibrations, ou encore pour détecter une anomalie. Une salle 24 de collecte et d'enregistrement des données de tests reçues peut être placée de manière attenante au support 16. Ces données peuvent également être communiquées à un centre d'analyse du test grâce à un module de communication, par exemple dans un navire tractant le bateau 4. Le support 16, notamment le poteau 18, peut être placé entre la turbomachine 8 et le module, éventuellement pour le protéger.

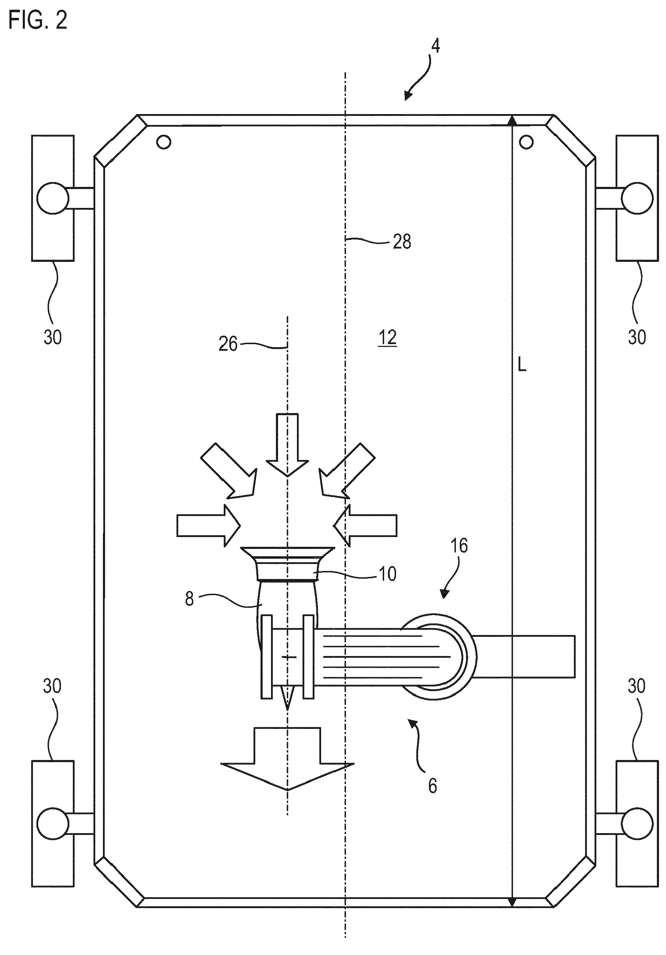

La figure 2 illustre une vue du dessus du bateau 4 et du banc de test 6. Ces derniers correspondent à ceux décrits en figure 1.

L'axe de rotation 26 de la turbomachine 8 peut être placé parallèlement à l'axe principal central 28 du bateau 4. Ce dernier axe 26 peut être l'axe médian. Elle peut être sensiblement au milieu du bateau 4 selon la largeur, ou sensiblement désaxée. Cet écart peut permettre d'équilibrer le contre poids du support et/ou de tout équipement du bateau 4. La turbomachine 8 est ici utilisée en tant que contrepoids. Sa position peut être ajustée d'avant en arrière, verticalement et latéralement grâce à l'adaptateur.

Suivant la longueur L, la majorité du bateau 4 est devant la turbomachine 8. La majorité, préférentiellement au moins les deux tiers de la longueur L de la plateforme 12 sont devant la manche d'air 10. Cette fraction est essentiellement plane. L'air entrant dans la turbomachine 8 n'est pas perturbé par le moindre obstacle pour ne pas biaiser les tests. La plateforme 12 reste plane sous et autour du support de fixation 16 de la turbomachine 8. Ainsi, il est possible d'amener la turbomachine 8 en roulant sur la plateforme 12, puis de la soulever en vue de sa fixation. Elle reste également dégagée, notamment plane, en aval de la turbomachine 8, en particulier pour éviter de se dégrader et pour ne pas créer de réverbérations.

Le bateau 4 est équipé de moyens de propulsion 30, agissant notamment directement sur l'eau. Ils permettent d'orienter le bateau 4 et donc la turbomachine 8 par rapport à une direction voulue, par exemple par rapport à du vent. Cela permet de se mettre bien face au vent, ou de biais. Cette dernière option permet de tester le fonctionnement de la turbomachine 8 en présence d'un vent de travers. Les moyens de propulsion 30 peuvent être orientables par rapport au bateau 4 de manière à le diriger, par exemple pour le faire tourner sur lui-même afin de l'aligner selon une incidence voulue tout en restant dans un minimum d'espace. Les moyens de propulsion 30 peuvent comprendre deux ou quatre unités de propulsion 30, par exemple à hélice et/ou à jet. Les unités 30 peuvent être placées à chaque coin du bateau 4.

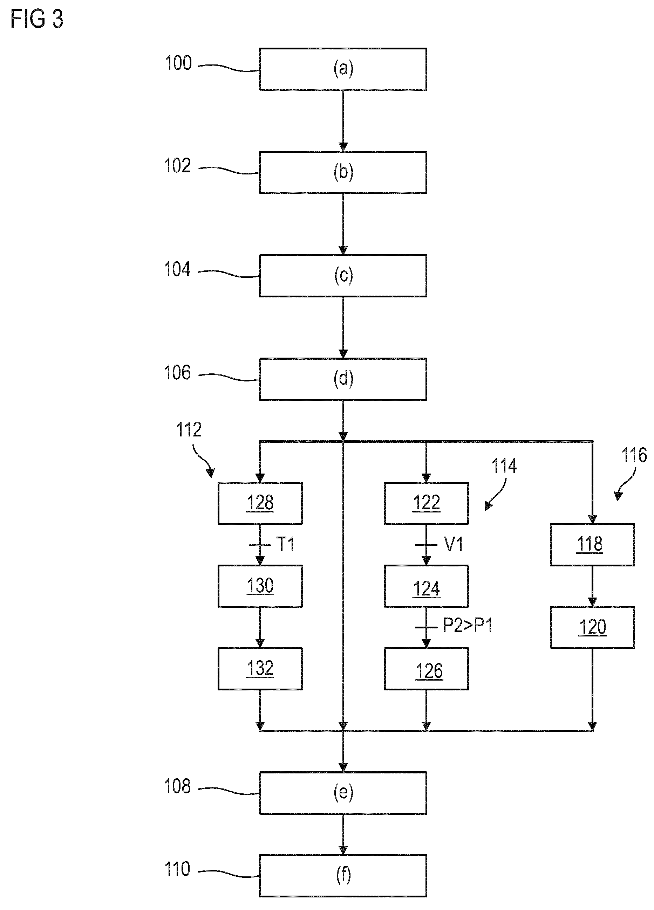

La figure 3 esquisse un diagramme du procédé de test de la turbomachine sur un bateau. Le bateau et le banc de test forment un ensemble qui peut correspondre à celui présenté en relation avec les figures 1 et 2.

Le procédé peut comporter les étapes suivantes, éventuellement réalisées dans l'ordre qui suit :
(a) fourniture et/ou réalisation 100 d'une turbomachine ;
(b) démontage 102 de la ou d'une turbomachine d'un véhicule qu'elle équipe ;
(c) transport 104 de la turbomachine fournie ou réalisée à l'étape (a) fourniture et/ou réalisation 100, ou démontée à l'étape (b) démontage 102;
(d) installation 106 de la turbomachine sur un bateau équipé d'un banc de test ;
(e) test 108 de la turbomachine sur le banc de test ;
(f) montage ou remontage 110 de la turbomachine sur un avion ou dans dans une autre structure utilisant le travail mécanique de la turbomachine. Cette étape reste une option car la turbomachine peut ensuite se rendre sur un autre banc de test.

L'étape (a) fourniture et/ou réalisation 100 peut comprendre la conception de la turbomachine, notamment en fonction de conditions d'utilisation prédéfinies. Ces conditions d'utilisation peuvent correspondre aux conditions qui sont simulées et/ou vérifées pendant l'étape (e) test 108 de. La turbomachine peut être montée et utilisée sur un véhicule à l'issue de l'étape (a) 100.

L'étape (a) fourniture et/ou réalisation 100, tout comme l'étape (b) démontage 102 sont optionnelles. Elles peuvent chacune être remplacée par l'autre étape. L'étape (c) transport 104 permet d'acheminer la turbomachine depuis son lieu de production ou le lieu d'où elle a été démontée. Le transport peut être supérieur ou égal à 1 km, supérieur ou égal à 10 km, supérieur ou égal à 100 km, ou supérieur ou égal à 1000 km. Le transport peut être réalisé par et/ou sur un autre véhicule que le bateau.

L'assemblage de la turbomachine testée peut être achevé à même le banc de test, par exemple dans le cas d'un prototype ou dans une réparation.

L'étape (d) installation 106 comprend la fixation de la turbomachine sur le banc de test. En parallèle, les alimentations en énergies et les capteurs sont branchés. Cette installation peut s'effectuer via un adaptateur. La turbomachine est montée en élévation par rapport à la plateforme sol, préférentiellement à plus de 2 m, plus préférentiellement à plus de 4 m ; afin de réduire la formation de tourbillons entre la plateforme et la turbomachine dans l'air qu'elle aspire.

L'étape (e) test 108 comprend le test de la turbomachine en fonctionnement. Sa poussée, ses déformations, ses vibrations, ses pressions, et ses variations de température sont testées et mesurées. D'autres phénomènes peuvent être suivis. Pendant l'étape (e) test 108, la turbomachine exerce une poussée supérieure à 10kN selon son axe de rotation. Elle est alimentée en carburant. La température de ses gaz d'échappement est supérieure ou égale à 200°C, préférentiellement supérieure ou égale à 500°C. Pendant le test, le bateau flotte sur de l'eau. Il est porté par de l'eau. Il peut s'agir d'une mer, d'un océan, d'un fleuve, d'un lac, de toute étendue d'eau. Cette poussée d'Archimède peut également être effective pendant l'étape (d) installation 106.

Le procédé peut également comprendre des actions (112; 114; 116) optionnelles avec plusieurs phases (118-132). Le procédé peut s'adapter à une présence de vent qu'il exploite. A cet effet, le procédé peut comprendre une phase de détection ou de mesure 118 d'un vent dans l'environnement du banc de test. Ensuite, le procédé comprend une phase de pivotement 120 du bateau de sorte à modifier, notamment à augmenter l'inclinaison entre l'axe du vent et l'axe de la turbomachine. Ceci peut s'effectuer grâce à au moins une unité de propulsion.

Une intensité de vent peut commander un déplacement du bateau pour l'essai. Le procédé peut comprendre une phase de sélection 122 d'une vitesse de vent V1, par exemple supérieure ou égale à 50 km/h ou à 200 km/h. Postérieurement, le procédé peut comprendre une phase d'identification 124 d'un endroit géographique où la vitesse du vent est supérieure ou égale à la valeur V1. La prise en compte d'un vent de vitesse V1 peut être une mesure en temps réel, ou être une probabilité de trouver un vent ayant une vitesse supérieure ou égale à V1. Si un endroit présente une probabilité P2 supérieure ou égale à une probabilité seuil P1, par exemple supérieure ou égale à 10%, l'endroit géographique est retenu. Puis, pendant une phase de déplacement 126, le bateau se déplace jusqu'à l'endroit géographique précédemment identifié en fonction de la vitesse du vent.

Le procédé peut prévoir de réaliser des tests à basse température. Pour cela une température T1 est sélectionnée dans une phase de sélection 128, par exemple inférieure à -20°C, ou inférieure à -40°C. Puis, le procédé suit une phase d'identification 130 d'un endroit géographique où la température sera inférieure ou égale à la température T1 lors du test futur. Cette sélection peut être une mesure au moment de l'identification, ou une prévision, ou reposer sur une probabilité P3. Alors, le procédé effectue une phase de déplacement 132 du bateau jusqu'à l'endroit géographique précédemment identifié en fonction de la température T1.

Les phases de déplacement (126; 132) peuvent être simultanées. Les phases (118-132) précitées sont optionnelles. Elles peuvent être effectuées entre les étapes (d) installation 106 et (e) test 108. Elles peuvent être effectuées avant l'étape (d) installation 106. Elles peuvent être entrecoupées d'étapes (100-110), éventuellement par alternance ; ou être réalisées avant toutes les étapes (100-110). Le procédé peut effectuer chacune des phases (118-132), par actions (112 ; 114 ; 116). Le choix d'un endroit peut correspondre à une condition de vent et à une condition de température. D'autres conditions peuvent s'ajouter pour contraindre le fonctionnement de la turbomachine, par exemple la pression atmosphérique.

## Revendications

1. Ensemble (2) comprenant un banc de test (6) de turbomachine (8), notamment un turboréacteur d'aéronef, le banc de test (6) comprenant une pluralité de capteurs ;
**caractérisé en ce qu'**il comprend en outre
un bateau (4) où le banc de test (6) est installé afin d'y tester la turbomachine (8).

2. Ensemble (2) selon la revendication 1, **caractérisé en ce que** le bateau (4) comprend une plateforme (12) généralement plane où est disposé le banc de test (6).

3. Ensemble (2) selon l'une des revendications 1 à 2, **caractérisé en ce que** la surface de la plateforme (12) est supérieure ou égale à 100 m2, préférentiellement supérieure ou égale à 500 m2, plus préférentiellement supérieure ou égale à 2500 m2.

4. Ensemble (2) selon l'une des revendications 1 à 3, **caractérisé en ce que** la ligne de flottaison est au moins 100 cm sous le niveau général de la plateforme (12), préférentiellement au moins 200 cm sous le niveau général de la plateforme (12).

5. Ensemble (2) selon l'une des revendications 1 à 4, **caractérisé en ce que** le banc de test (6) comprend une interface de fixation de turbomachine (8) qui est au moins 4,00 m au-dessus de la plateforme (12), préférentiellement au moins 6,00 m au-dessus, plus préférentiellement au moins 8,00 m au-dessus.

6. Ensemble (2) selon l'une des revendications 1 à 5, **caractérisé en ce que** le banc de test (6) comprend un support de fixation (16) de la turbomachine (8) avec une portion de fixation de turbomachine (8), la portion étant éventuellement configurée de sorte à y suspendre la turbomachine (8).

7. Ensemble (2) selon la revendication 6, **caractérisé en ce que** le support (16) comprend un pilier (18) vertical et éventuellement une poutre (20) horizontale configurée pour recevoir la turbomachine (8), notamment pour l'y suspendre via un adaptateur (22).

8. Ensemble (2) selon l'une des revendications 1 à 7, **caractérisé en ce que** selon sa longueur le bateau (4) présente trois tiers, le tiers arrière étant configuré pour y installer la turbomachine (8).

9. Ensemble (2) selon l'une des revendications 1 à 8, **caractérisé en ce que** le bateau (4) est une barge, notamment à fond plat ou sensiblement incurvé.

10. Ensemble (2) selon l'une des revendications 1 à 9, **caractérisé en ce que** le bateau (4) comprend un axe principal central (28) configuré pour être parallèle à l'axe (26) de la turbomachine (8), lesdits axes (26 ; 28) étant éventuellement désaxés.

11. Procédé de test d'une turbomachine (8) comprenant les étapes suivantes, éventuellement réalisées dans l'ordre suivant :
(d) installation (106) de la turbomachine (8) sur un banc de test (6) comprenant une pluralité de capteurs ,
**caractérisé en ce que**
le banc de test (6) est installé sur un bateau (4);
et **en ce que** le procédé comprend en outre une étape de (e) test (108) de la turbomachine (8) depuis ledit bateau (4); préférentiellement le banc de test (6) et le bateau (4) forment un ensemble (2) conforme à l'une des revendications 1 à 10.

12. Procédé selon la revendication 11, **caractérisé en ce que** préalablement à l'étape (d) installation (106), le procédé comprend une étape de (c) transport (104) de la turbomachine (8).

13. Procédé selon l'une des revendications 11 à 12, **caractérisé en ce qu'**il comprend une phase de sélection (128) d'une température T1, puis une phase d'identification (130) d'un endroit géographique où la température est inférieure ou égale à la température T1, puis une phase de déplacement (132) du bateau (4) jusqu'à l'endroit géographique précédemment identifié.

14. Procédé selon l'une des revendications 11 à 13, **caractérisé en ce qu'**il comprend une phase de sélection (122) d'une vitesse de vent V1, puis une phase d'identification (124) d'un endroit géographique où la vitesse du vent est supérieure ou égale à la valeur V1 ou ledit endroit présente une probabilité P2 supérieure ou égale à une probabilité P1 de trouver un vent ayant une vitesse supérieure ou égale à V1, puis une phase de déplacement (126) du bateau (4) jusqu'à l'endroit géographique précédemment identifié.

15. Procédé selon l'une des revendications 11 à 14, **caractérisé en ce qu'**il comprend un phase de détection (118) d'un vent dans l'environnement du banc de test (6) se déplaçant selon un axe, le procédé comprenant une phase de pivotement (120) du bateau (4) de sorte à modifier, notamment à augmenter l'inclinaison entre l'axe du vent et l'axe (26) de la turbomachine (8).
